# EUROPÄISCHE PATENTSCHRIFT

(11) **EP 1 250 948 B1**
(45) Veröffentlichungstag und Bekanntmachung des Hinweises auf die Patenterteilung: **09.06.2004**
(21) Anmeldenummer: 01107076.0
(22) Anmeldetag: 21.03.2001
(51) Int. Cl.: B01D 29/11, B01D 29/52, B01D 29/88, B01D 37/02, B01D 37/04

(54) **Anschwemmfilter**
Pre-coat filter
Filtre à pré-couche

(43) Veröffentlichungstag der Anmeldung: 23.10.2002
(73) Patentinhaber: Anton Steinecker Maschinenfabrik GmbH, 85356 Freising-Attaching (DE)
(72) Erfinder: Hahn, Adolf, 92726 Waidhaus (DE); Banke, Friedrich, 84416 Inning am Holz (DE); Flossmann, Rudolf, 85416 Langenbach (DE); Gratzer, Harald, 85459 Berglern (DE); Kain, Josef, 85417 Marzling (DE)
(74) Vertreter: Grünecker, Kinkeldey, Stockmair & Schwanhäusser Anwaltssozietät

(56) Entgegenhaltungen:
- DE-A- 3 810 696
- US-A- 1 771 928

## Beschreibung

Die Erfindung betrifft einen Anschwemmfilter zur Filtration und/oder Stabilisierung von Fluiden, insbesondere von Bier, gemäß dem Oberbegriff des Anspruchs 1 und ein Filterverfahren nach dem Oberbegriff des Anspruchs 7.

Ein solcher Filter ist bereits aus der Druckschrift US-A-1 771 928 bekannt. Diese Druckschrift zeigt einen Pressfilter mit Filterkerzen, einen Ablauf für Unfiltrat mit einem Steuerventil sowie einen Ablauf für Filtrat mit einem Absperrventil. Diese Filteranlage ist ausgelegt, um große Mengen an Flüssigkeit zu reinigen, die einen hohen Feststoffanteil aufweisen. Die gezeigte Anordnung ist nicht zur Filtration von Bier geeignet, sondern für Flüssigkeiten mit hohem Feststoffanteil. Nach der Filtration wird der Filterkuchen aus dem Zylinder über Druckluft entfernt, wobei die Filterlösung über die Luft in den Vorratsbehälter ausgeschoben wird. Ein Ausschieben mit Luft ist bei der Bierfiltration nicht möglich.

Die Druckschrift DE 3810 696 zeigt eine Filter- und Stabilisierungseinrichtung mit zwei Unfiltratzuführungen mit entsprechenden Absperrarmaturen, wobei das Unfiltrat durch die Filterkerzen sowohl nach oben in den Filtratraum als auch nach unten in die Ableitung fließen kann, wobei die Filtratsableitungen durch entsprechende Absperrarmaturen abgesperrt werden können, um die Richtung der Flüssigkeitsströmung zu regeln. Am unteren Ende des Behälters befindet sich ein Auslass für Schlamm, der nach Beendigung des Filterzyklus ausgelassen wird.

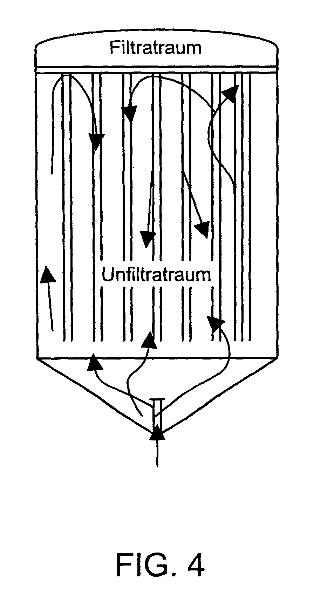

Bei der Filtration und /oder Stabilisierung von Bier werden derzeitig insbesondere Anschwemmfilter verwendet, wie sie schematisch in Fig. 4 beispielsweise gezeigt sind. Die herkömmlichen Anschwemmfilter umfassen dabei einen Filterkessel, der durch eine Abtrennplatte, an der Filterkerzen hängen, in einen Unfiltratraum und in einen Filtratraum unterteilt wird. Das Unfiltrat wird den Unfiltratraum zugeführt, läuft durch eine Anschwemmschicht in die Filterkerzen ein und wird dabei gefiltert. Es gelangt dann durch die Filterkerzen nach oben in einen Filtratraum, von wo es entnommen werden kann.

Der Einsatz von auch als Lochplatten bezeichneten Abdeckplatten bringt jedoch den Nachteil mit sich, dass die Strömung des Unfiltrats gegen die Unterseite der Lochplatten, also gegen eine Wand, gefahren wird. Theoretisch ergibt sich so eine linear auf null abnehmende Vertikalgeschwindigkeit, die zur Folge hat, dass sich die Kieselgurpartikel nicht gleichmäßig über die Höhe verteilen. Dem wird durch überlagerte Zirkulationsströmungen, die durch sog. Einlaufverteiler erzeugt werden, mehr oder weniger erfolgreich entgegengewirkt. Diese Strömungen werden auch vagabundierende Strömungen genannt.

Somit ergibt sich das Problem, dass insbesondere bei geringer Filterleistung oder schwerfiltrierbaren Bieren die Anschwemmung der Anschwemmschicht, also des Filterhilfsmittels, wie z.B Kieselgur, vor und während der Filterung an den Filterkerzen unregelmäßig erfolgen kann. Insbesondere die schweren Filterhilfsmittelpartikel können nicht ausreichend gleichmäßig, insbesondere im oberen Bereich des Filterraums, mitgenommen werden und sich dann gleichmäßig ablagern. Eine dadurch sich einstellende inhomogene Partikelgrößenverteilung führt zu einer inhomogenen Verteilung des Durchflusses über die Länge der Kerze, da die Partikelverteilung maßgeblich den Durchflusswiderstand des Kuchens mitbestimmt.

Weiter bringt die herkömmliche Anordnung den Nachteil mit sich, dass sich dann, wenn z.B. ein Vormedium (z.B. Bier) im Filterkessel durch ein Nachmedium (z.B. Wasser) ausgetauscht werden soll, eine unerwünschte Verschnittmenge ergeben kann, weil durch die Filterelemente bereits das Nachmedium (Wasser) abfließt, während sich der Kessel noch voll Vormedium befindet.

Der vorliegenden Erfindung liegt daher die Aufgabe zu Grunde einen Anschwemmfilter, sowie ein Filtrationsverfahren bereit zu stellen, um eine wirkungsvolle Anschwemmung der Anschwemmschicht auf den Filterkerzen zu erzielen und gleichzeitig zu ermöglichen, den Filtrationsvorgang an verschiedene Prozessschritte anzupassen..

Erfindungsgemäß wird diese Aufgabe durch die kennzeichnenden Merkmale der Ansprüche 1 und 7 gelöst.

Dadurch wird erreicht, das man ein Teil des Unfiltratstromes nicht durch die Filterkerzen, sondern direkt aus dem Filterkessel ausleiten kann. Durch die zwei Abläufe - einmal durch die Filterkerzen hindurch und andererseits direkt aus dem Unfiltratraum heraus - können somit zwei Teilströme erzielt werden, nämlich ein Filtratstrom und ein Unfiltratstrom. Durch den Unfiltratstrom kann selbst bei geringer Filterleistung oder bei schwerfiltrierbaren Bieren eine Grundströmung im Filter erzeugt werden, die eine gleichmäßige Anschwemmung sicherstellt. Insbesondere die schweren Kieselgurpartikel werden auch in den oberen Bereich des Filterraumes mitgenommen und können sich gleichmäßig auf den Filterkerzen ablagern. Mit dem Merkmal Ablauf ist im Zusammenhang mit der Erfindung ein solcher Ablauf ( oder mehrere ) zu verstehen, der die Möglichkeit schafft, im praktischen Betrieb relevante Mengen ausleiten zu können, d.h. der für diesen Zweck insbesondere einen geeigneten Durchmesser aufweist. Vorteilhafterweise wird man den Durchmesser des Unfiltratablaufs entsprechend, d.h. etwa gleich, wie den Durchmesser des Filtratablaufes wählen, um so unabhängig von der Teilstromaufteilung mit gleichen Abflussgeschwindigkeiten arbeiten zu können,

Erfindungsgemäß sind sowohl der Ablauf für das Filtrat als auch der Ablauf für das Unfiltrat mengenmäßig regulierbar. Dadurch ist es erstmalig bei der Bierfiltration möglich, definierte und vor allem regelbare Anströmungen der Filterflächen zu erreichen. Durch den regelbaren Ablauf für Unfiltrat und Filtrat kann das Verhältnis des Unfiltratstroms zu dem Filtratstrom eingestellt werden. Somit können die Verschnittstrecken verschiedener Medien z.B. Wasser-Bier, Bier-Wasser oder Bier-Bier reduzieret werden, in dem man den Filtratstrom im Verhältnis zu dem Unfiltratstrom gering hält. Dadurch wird das Vormedium in kürzester Zeit von unten nach oben aus dem Unfiltratraum ausgeschoben, ohne daß nennenswerte Menge des Folgemediums durch die Filterelemente abfließen und den Verschnitt produzieren, denn die Verschnittmengen entstehen bei bisherigen Systemen dadurch, dass durch die Elemente bereits das Nachmedium abfließt, während sich der Kessel noch voll Vormedium befindet.

Erfindungsgemäß ist der Zulauf für das Unfiltrat in einem Bereich unterhalb der Filterkerzen angeordnet ist, da der Kessel dann gleichmäßig von unten nach oben durchströmt werden kann.

Gemäß einer bevorzugten Ausführungsform ist der Filterkessel in an sich bekannter Weise durch eine Trennwand in einen Filtratraum und in einen Unfiltratraum geteilt, wobei der Ablauf für das Unfiltrat am oberen Ende der Filterkerzen in Bezug auf die Trennwand angeordnet ist oder aber in der Trennwand selbst ausgebildet ist. Diese Anordnung bringt eine sehr gleichmäßige Grundströmung des Unfiltrats bis in den oberen Bereich der Filterkerzen mit sich.

Alternativ dazu kann der Filterkessel auch einen Registerablauf für das Filtrat aufweisen, wobei dann der Ablauf für das Unfiltrat am oder über dem oberen Ende der Filterkerzen, z.B. in Bezug auf den Registerablauf angeordnet ist. Bei dem Registerablauf werden die Filterkerzen über Rohrsysteme zusammengefasst und separat abgeführt. Diese Anordnung bringt den Vorteil mit sich, dass dann keine Trennwand mehr notwendig ist, so dass sich die Unfiltratströmung zwischen den Registerabläufen hindurch gleichmäßig nach oben fortsetzen kann. Darüber hinaus ist diese Anordnung platzsparend, da kein gesonderter Filtratraum mehr notwendig ist.

Es ist vorteilhaft, wenn der Ablauf für das Unfiltrat mit einer Bypassleitung verbindbar ist, um das abgeführte Unfiltrat erneut dem Unfiltratraum zuzuführen. Die Bypassleitung kann entweder unmittelbar zum Einlass in den Filterkessel führen, oder aber über einen Zwischenspeicher laufen. Die Verwendung eines Zwischenspeichers bringt den Vorteil mit sich, dass überschüssiges Unfiltrat gespeichert werden kann, wodurch der Verschnitt weiter reduziert wird.

Gemäß dem erfindungsgemäßen Verfahren wird Unfiltrat einem Unfiltratraum zugeführt und einerseits durch die Filterkerzen hindurch in einen Filtratstrom und andererseits unmittelbar als Unfiltratstrom aus dem Unfiltratraum geregelt abgeführt. Das abgeführte Unfiltrat kann dann über eine Bypassleitung erneut dem Unfiltratraum zugeführt werden.

Das Filtrationsverfahren kann mehrere aufeinander folgende Unterprozesse umfassen, bei denen unterschiedliche Medien nacheinander in den Unfiltratraum eingeleitet werden.

So kann z.B.beim Verdrängen eines Vormediums durch ein Nachmedium das Verhältnis der Nennleistung von Unfiltratstrom zu Filtratstrom groß, z.B. 95:5 gewählt werden.

Ein Unterprozess bei dem Filtrationsverfahren ist der Voranschwemmvorgang, bei dem in den Unfiltratraum ein Vormedium aus Wasser und Filterhilfsmittel eingeleitet wird, wobei das Verhältnis von Unfiltratstrom zu Filtratstrom kleiner 1 ist, z.B 1:9 betragen kann. Mit diesem Voranschwemmvorgang kann eine geeignete Strömung des Unfiltrats hergestellt werden, so dass es zu einer gleichmäßigen Anlagerung der Anschwemmschicht kommt.

An den Voranschwemmvorgang kann sich als weiterer Prozessschritt ein Unterprozess anschliessn, bei dem das Vormedium aus Wasser und Filterhilfsmittel mit dem zum filtrierenden Unfiltrat verdrängt wird.

Beim eigentlichen Filtrationsvorgang ist das Verhältnis von Unfiltratstrom zu Filtratstrom deutlich kleiner als 1, z.B. 5:95. Somit wird der Großteil des Unfiltrats durch die Filterkerzen geleitet, während nur ein kleiner Unfiltratstrom aufrecht erhalten wird, der für eine gleichmäßige Strömung des Unfiltrats im Unfiltratraum sorgt.

Nach dem Filtrationsvorgang wird der Filterinhalt durch ein Nachmedium ausgeschoben, wobei auch hier wieder das Verhältnis von Unfiltratstrom zu Filtratstrom deutlich grösser als 1, z. B. 90: 10 oder noch grösser gewählt werden kann.

Die Erfindung wird nachfolgend anhand der Figuren näher erläutert.
- Fig. 1: zeigt einen schematischen Längsschnitt durch eine erste Ausführungsform der vorliegenden Erfindung.
- Fig. 2: zeigt einen schematischen Längsschnitt durch eine zweite Ausführungsform der vorliegenden Erfindung.
- Fig. 3: zeigt eine schematische Darstellung eines Filtersystems, das einen erfindungsgemäßen Anschwemmfilter umfasst.
- Fig. 4: zeigt einen Längsschnitt durch einen herkömmlichen Anschwemmfilter.

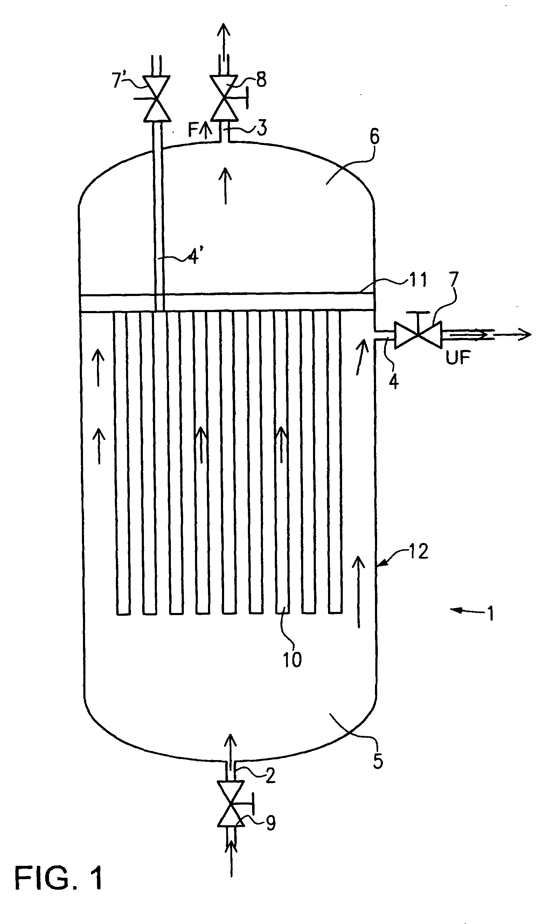

Fig. 1 zeigt ein erstes Ausführungsbeispiel der Erfindung. Der Anschwemmfilter 1 umfasst einen Filterkessel 12, der durch eine horizontale Trennwand 11 in einen Unfiltratraum 5 und in einen Filtratraum 6 unterteilt ist. Von der horizontal verlaufenden Trennwand 11 hängen Filterkerzen 10 vertikal in den Unfiltratraum 5. Die im Wesentlichen hohlzylindrischen Filterkerzen 10 weisen ein nicht näher gezeigtes hohlzylinderförmiges Filterelement mit entsprechenden Fluiddurchlässen auf. Das Filterelement kann beispielsweise aus einem spiralförmig gewundenen Draht bestehen.

Der Filterkessel 12 weist weiter einen Zulauf 2 für das Unfiltrat auf, wobei die Menge des Unfiltrats, das zuläuft, z.B. über ein Dosierventil 9 eingestellt werden kann. Weiter weist der Filterkessel einen Ablauf 4 für einen Teil des Unfiltrats aus dem Unfiltratraum 5 auf. Der Ablauf für das Unfiltrat 4 ist mengenmäßig über eine entsprechende Einrichtung, hier z.B. das Dosierventil 7, regulierbar. Der Ablauf für das Unfiltrat 4 befindet sich am oberen Ende der Filterkerzen (10) in Bezug auf die Trennwand 11.

Der Ablauf 4 für das Unfiltrat kann jedoch auch in der Trennwand 11 selbst durch Ausbildung entsprechender Aussparungen und Verrohrungen durch den Filtratraum hindurch ausgebildet sein. Dabei ist es insbesondere günstig, wenn, wie das in Fig.1 als Alternative gestrichelt angedeuted ist, das Unfiltrat durch mehrere Anstiche durch die Trennwand hindurch in nach oben durch den Filtratraum hindurchgeführten Leitungen 4' ausgeleitet wird. Dabei werden Querströmungen vermieden und es stellt sich insgesamt eine sehr gleichmässige Strömung ein.

Am oberen Ende des Filterkessels 12 befindet sich ein Ablauf 3 für das Filtrat, wobei die Menge des Ablaufs und somit der Filtratstrom über eine Einrichtung, hier z.B. das Stellventil 8, mengenmäßig regulierbar ist. Dadurch, dass es bei der erfindungsgemäßen Anschwemmfilteranordnung zwei regulierbare Teilströme gibt, d.h. einen Filtratstrom F und einen Unfiltratstrom UF, ist es möglich, definierte und vor allem regelbare Anströmungen der Filterflächen zu erreichen.

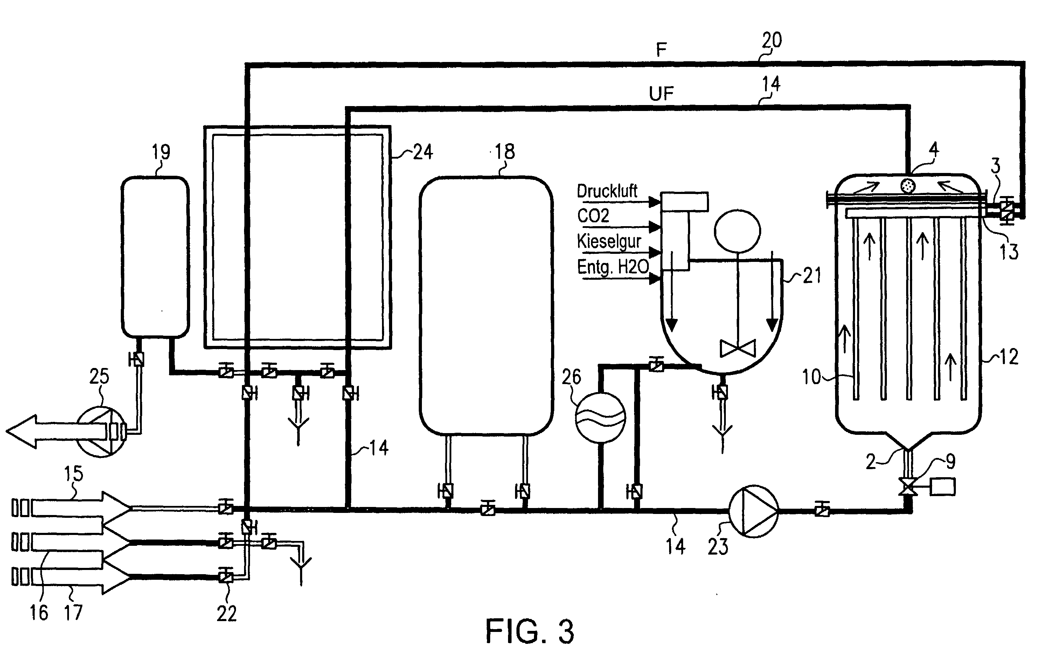

Der Ablauf 4 für das Unfiltrat kann mit einer Bypassleitung 14 verbunden sein, die das Unfiltrat dann wieder in den Unfiltratraum 5 zurückführt, z.B. indem die Bypassleitung 14 (sh. Fig. 3) wieder in den Zulauf 2 für das Unfiltrat mündet. Diese Bypassanordnung wird später in Zusammenhang mit der Fig. 3 näher erläutert.

Im Betrieb des erfindungsgemäßen Anschwemmfilters 1 wird Unfiltrat über den Zulauf 2 in den Unfiltratraum 5 eingeleitet, wobei dem Unfiltrat beispielsweise Filterhilfsmittel, wie z.B. Kieselgur, zugesetzt wurde. Vor und während der Filtration setzt sich eine Anschwemmschicht an der Oberfläche der Filterkerzen 10 ab. Dadurch, dass mit Hilfe des Ablaufs 4 eine definierte Unfiltratströmung UF in Richtung des Ablaufs erzeugt wird, wie durch die Pfeile dargestellt ist, wird eine gleichmäßige Anschwemmung erreicht. Natürlich können auch mehrere Abläufe über den Umfang verteilt vorhanden sein , die dann beispielsweise in eine gemeinsame Sammelleitung münden. Dadurch wird die Gleichmässigkeit der Strömumg weiter verbessert.

Das nicht ausgeleitete Unfiltrat tritt durch die Fluiddurchlässe der Filterkerzen 10 in die Filterkerzen ein und wird gefiltert. Es gelangt dann durch die Kerzen nach oben in den Filtratraum 6, von wo es dann über den Ablauf 3 abfließen kann.

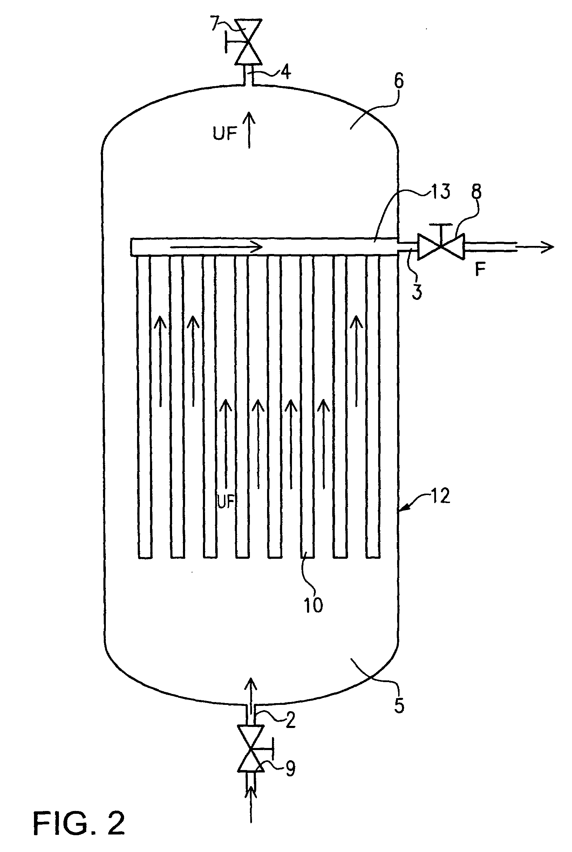

Fig. 2 zeigt eine zweite Ausführungsform der Erfindung, die im Wesentlichen dem ersten Ausführungsbeispiel, das in Fig. 1 gezeigt ist, entspricht, wobei jedoch der Filterkessel 12 keine Trennwand 11 und keinen Filtratraum 6 aufweist, sondern nur einen Unfiltratraum 5, wobei das Filtrat aus den Filterkerzen 10 über ein sogenanntes Register 13 abgeleitet wird. Dabei werden die Filterelementabläufe über Rohrsysteme zusammen gefasst und separat abgeführt. Das Register 13 stellt somit den Ablauf 3 für das Filtrat dar, wobei die Ablaufmenge über eine Einrichtung, wie z.B. das Dosierventil 8 eingestellt werden kann. In einem oberen Bereich der Filterkerzen 10 in Bezug auf den Registerablauf, vorzugsweise am oberen Ende des Filterkessels 12 befindet sich der Ablauf 4 für das Unfiltrat, so dass auch hier wieder ein definierter Unfiltratstrom UF erzeugt werden kann, der zu einer gleichmäßigen Anschwemmung der Anschwemmschicht und zu einer gleichmäßigen Filtrierung führt.

Auch hier kann über eine Einrichtung, z.B. das einstellbare Dosierventil 7, die abgeführte Menge des Unfiltrats reguliert werden. Durch die Verwendung des Registerablaufs 13 kann der Unfiltratstrom ungehindert bis zum oberen Ende der Filterkammer 12 strömen, da der Unfiltratstrom auch ungehindert durch freie Abschnitte zwischen den Rohrleitungen des Registers 13 hindurch fließen kann. Auch bei diesem zweiten Ausführungsbeispiel kann der Ablauf 4 für das Unfiltrat über eine Bypassleitung 14 mit dem Zulauf 2 für das Unfiltrat verbunden sein.

Eine solche Bypassleitung ist näher in der Fig. 3 dargestellt. In der Fig. 3 ist das in Fig. 2 gezeigte zweite Ausführungsbeispiel, das den Registerablauf 13 aufweist, beschrieben. Anstelle dieses zweiten Ausführungsbeispiels kann selbstverständlich auch das in Fig. 1 gezeigte Ausführungsbeispiel eingesetzt werden.

Wie aus Fig. 3 hervorgeht ist der Ablauf 4 für das Unfiltrat über eine Bypassleitung 14 wieder mit dem Zulauf 2 für das Unfiltrat am unteren Ende des Filterkessels 12 verbunden. Der Unfiltratstrom UF wird über die Steuereinrichtung 24 mengenmäßig gesteuert. Stellglied für diese Steuerung kann entweder das in Fig. 1 und 2 beschriebene Stellventil 7 sein. Die Steuerung 24 steuert auch die Filtratströmung F über ein entsprechendes Stellglied wie z.B. das in Fig. 1 und 2 dargestellte Dosierventil 8. Darüber hinaus kann die Steuerung 24 auch noch den Druck in dem Filterkessel 12 steuern sowie die Menge an Unfiltrat, die über eine Dosierpumpe 23 dem Filterkessel 12 zugeführt wird, um so die entsprechenden Filtrat- bzw. Unfiltratströme einzustellen.

Auch die Trübung des Filtrats und des Unfiltrats kann gemessen werden. Wie aus Fig. 3 hervorgeht kann das Filtrat über die Filtratleitung 20 entweder dem Vorratsbehälter 19 zugeführt werden oder aber bei entsprechender Trübung erneut über die Leitung 14 dem Filterkessel 12 zugeführt werden. Mit dem Bezugszeichen 22 sind Absperrventile bezeichnet. Das Unfiltrat kann über die Bypassleitung 14 auch zunächst einem Vorratsbehälter für Unfiltrat 18 zugeführt werden. Der Vorratsbehälter für das Unfiltrat 18 bringt im Zusammenhang mit dem erfindungsgemässen " Bypassverfahren " den Vorteil mit sich, dass eine Restmenge von Unfiltrat, das entsteht, wenn z.B. ein Vormedium durch ein Nachmedium aus dem Filterkessel 12 gedrückt wird, keine nennenswerte Verdünnung erfährt, sondern in dem Vorratsbehälter 18 gespeichert werden kann.

Das Filtersystem weist weiter eine Versorgungsleitung 15 für Unfiltrat, eine Vorratsleitung für entgastes Wasser 16 und eine Vorratsleitung für Spülwasser 17 auf, die jeweils über entsprechende Absperrventile 22 in die Bypassleitung 14 münden. Weiter weist die Anordnung eine Dosiereinrichtung 21 für Filterhilfsmittel in den Unfiltratstrom, wie z.B. Kieselgur, auf. Die Dosierung erfolgt über eine Dosierpumpe 26 vor der Pumpe 23. So kann die Dosierpumpe unter klar definierten Verhältnissen, ohne den sonst üblichen, eingangsseitigen Druckanstieg betrieben werden. Allerdings könnte die Dosierung auch - wie bisher üblich -nach der Pumpe 23 erfolgen.

Das erfindungsgemäße Filtrationsverfahren, das hier anhand der Bierfiltration näher erläutert wird, kann mehrere Unterprozesse umfassen.

Zunächst befindet sich das in Fig. 3 gezeigte System in einer Grundstellung. Das System ist voll mit Wasser, bevorzugt Sterilwasser, und alle Absperrorgane 22 sind geschlossen. Dann wird dieses Wasser mit entgastem Wasser, das aus der Versorgungsleitung 16 kommt, verdrängt. Bei diesem Unterprozess beträgt das Verhältnis der Nennleistung von Filtratstrom zu Unfiltratstrom z.B 1:9.

Im Anschluss daran erfolgt der Anschwemmvorgang. Dabei wird entgastes Wasser unter Zusatz von Filterhilfsmittel aus der Dosiereinrichtung 21 dem Filterkessel 12 zugeführt, um bereits vor der Filtration des Bieres eine Anschwemmschicht auf den Filterkerzen 10 zu erzeugen. Bei diesem Unterprozess beträgt das Verhältnis der Nennleistung von Filtratstrom zu Unfiltratstrom z.B 9:1. Für die Anschwemmung kann statt entgastem Wasser auch alternativ filtriertes Bier verwendet werden.

Dieses Verhältnis von Filtrat zu Unfiltratstrom bringt eine gleichmäßige Anschwemmung und eine rasche Anschwemmung mit sich, wobei auch hier das Unfiltrat über die Bypassleitung 14 den Filterkessel 12 erneut zugeführt werden kann.

Im Anschluss wird das Anschwemmwasser mit dem eigentlichen Unfiltrat, nämlich dem ungefilterten Bier, verdrängt. Das Unfiltrat wird über die Versorgungsleitung 15 der Bypassleitung 14 und über die Pumpe 23 dem Filterkessel 12 zugeführt. Das Verhältnis von Filtrat zu Unfiltratstrom beträgt hier z.B 5:95. Dadurch, dass der Unfiltratstrom bei diesem Unterprozess sehr hoch ist und der Filtratstrom nur sehr gering ist, kann die Verschnittmenge erheblich reduziert werden. Über die Leitung 14 und die Pumpe 23 wird hierbei solange im Kreislauf gefahren, bis sich eine ausreichende Filtratqualität (z.B. Trübung ) eingestellt hat. Alternativ kann auch das Vorgang erzeugte Filtrat, das noch nicht ausreichend filtriert ist und noch mit Anschwemmwasser vermischt ist, wie Unfiltrat in dem Vorratstank 18 gespeichert werden, bevor es z.B. über die Leitung 14 wieder dem Filterkessel zugeführt wird.

Im Anschluss erfolgt der eigentliche Filtrationsvorgang, wobei das Unfiltrat 15 aus der Unfiltratversorgung 15 über die Leitung 14 und Pumpe 23 unter Zusetzung von Filterhilfsmittel über die Dosiereinrichtung 21 dem Filterkessel 12 zugeführt wird. Bei der eigentlichen Filtration beträgt das Verhältnis der Nennleistung von Filtrat zu Unfiltratstrom z.B 95:5. Durch den kontinuierlichen, aber geringen Unfiltratstrom während der Bierfiltration kommt es zu einer gleichmäßigen Anschwemmung während der laufenden Dosage und zu einer gleichmässigen Filtration.

Nach der eigentlichen Filtration wird der Filterinhalt in den Vorratstank 18 durch entgastes Wasser aus der Vorratsleitung 16 in den Vorratstank 18 ausgeschoben. Dabei beträgt das Verhältnis der Nennleistung von Filtratstrom zu Unfiltratstrom z.B 5:95. Der niedrige Filtratstrom durch den Filterhilfsmittelkuchen dient hierbei lediglich der Stabilisierung des Kuchens und kann bei entsprechender Stabilität noch weiter auf nahezu null reduziert werden. Wichtig bei diesem Prozess ist die Aufrechterhaltung einer Strömung von Unfiltrat zur Filtratseite hin.

Somit wird das Vormedium, hier also das Bier, in kürzester Zeit von unten nach oben aus dem Unfiltratraum ausgeschoben, ohne dass nennenswerte Mengen des Folgemediums, hier also entgastes Wasser, durch die Filterelemente abfließen und den Verschnitt produzieren.

Das Unfiltrat im Vorratsbehälter 18 wird entweder bis zur nächsten Filtration aufbewahrt oder nach Bedarf in den Lagerkeller zurückgepumpt. Wesentlich ist, dass es sich hierbei um vollwertiges, unverdünntes Bier handelt. Dies ist insbesondere bei der Filtration von vielen verschiedenen Biersorten von Bedeutung.

Nach entsprechender Reinigung wird die Anordnung wieder in ihre Grundstellung gebracht, wobei das System voll Sterilwasser und alle Absperrorgane geschlossen sind.

Wie aus dem zuvor beschriebenen Filtrationsverfahren hervorgeht, kann dadurch, dass der Anschwemmfilter sowohl einen Ablauf für das Filtrat 3 als auch einen Ablauf für das Unfiltrat 4 aufweist, der Filtrat- und der Unfiltratstrom derart zueinander geregelt werden, dass sich eine ideale Anschwemmung ergibt. Darüber hinaus kann erreicht werden, dass die Verschnittmenge von aufeinanderfolgenden Medien reduziert wird.

Es ist noch anzumerken, dass in der vorstehenden Beschreibung überwiegend die Filtration von Bier beschrieben ist. Das erfindungsgemässe Verfahren und die Vorrichtung lassen sich aber genauso gut bei der kombinierten Stabilisierung von Bier einsetzen. Häufig erfolgt die Stabilisierung ohnehin bei der Filtration durch geeignete Zusätze, wie z.B. Kieselsäurepräparate.

## Patentansprüche

1. Anschwemmfilter zur Filtration und /oder Stabilisierung von Fluiden, insbesondere von Bier, umfassend einen Filterkessel (12) mit einem Zulauf (2) für Unfiltrat, einen Unfiltratraum (5), mehrere in dem Unfiltratraum angeordnete Filterkerzen (10) und einen Ablauf für das Filtrat (3), wobei im Unfiltratraum (5) wenigstens ein Ablauf (4) für das Unfiltrat angeordnet ist, und eine Einrichtung (7) zum mengenmäßigen Regulieren des Unfiltratablaufs, wobei der Zulauf für das Unfiltrat (2) in einem Bereich unterhalb der Filterkerzen (10) angeordnet ist und der Ablauf (4) für das Unfiltrat am oder über dem oberen Ende der Filterkerzen (10) angeordnet ist, **dadurch gekennzeichnet, dass** eine Einrichtung (8) zum mengenmäßigen Regulieren des Filtratablaufs vorgesehen ist, so dass das Verhältnis von Unfiltratstrom zu Filtratstrom einstellbar ist.

2. Anschwemmfilter nach mindestens einem der vorhergehenden Ansprüche,
**dadurch gekennzeichnet, dass** der Filterkessel (12) durch eine Trennwand (11) in einen Filtratraum (6) und einen Unfiltratraum (5) geteilt ist, und sich der Ablauf für das Unfiltrat (4) am oberen Ende der Filterkerzen in Bezug auf die Trennwand (11), oder in der Trennwand angeordnet ist.

3. Anschwemmfilter nach Anspruche 1,
**dadurch gekennzeichnet, dass** der Filterkessel (12) einen Registerablauf (13) für das Filtrat aufweist und der Ablauf (4) für das Unfiltrat am oder über dem oberen Ende der Filterkerzen (10) in Bezug auf den Registerablauf angeordnet ist.

4. Anschwemmfilter nach mindestens einem der vorhergehenden Ansprüche,
**dadurch gekennzeichnet, dass** der Ablauf für das Unfiltrat (4) mit einer Bypassleitung (14) verbindbar ist, um das abgeführte Unfiltrat erneut dem Unfiltratraum (5) zuzuführen.

5. Anschwemmfilter nach Anspruch 4 ,
**dadurch gekennzeichnet, dass** die Bypassleitung (14) über einen Zwischenspeicher (18) läuft.

6. Verfahren zur Filtration und/oder Stabilisierung von Fluiden wie etwa von Bier mit einem Anschwemmfilter, mit folgenden Schritten:
- Zuführen eines Unfiltrats in einen Unfiltratraum, in einem Bereich unterhalb von Filterkerzen,
- Filtern des Unfiltrats durch Filterkerzen,
- Abführen des Filtrats, wodurch ein Filtratstrom erzeugt wird
- geregeltes Abführen eines Teils des Unfiltrats aus dem Unfiltratraum heraus am oder über dem oberen Ende der Filterkerzen,
wodurch ein Unfiltratstrom erzeugt wird,
**dadurch gekennzeichnet, dass**
sowohl der Ablauf für das Filtrat (3) als auch der Ablauf für das Unfiltrat mengenmäßig regulierbar sind und während des Filtrationsvorgangs das Verhältnis der Nennleistung von abgeleiteten Unfiltratstrom zu abgeleiteten Filtratstrom < 1 ist.

7. Verfahren nach Anspruch 6,
**dadurch gekennzeichnet, dass** das abgeführte Unfiltrat über eine Bypassleitung (14) erneut dem Unfiltratraum zugeführt wird.

8. Verfahren nach Anspruch 6 oder 7,
**dadurch gekennzeichnet, dass** es mehrere aufeinanderfolgende Unterprozesse umfasst, bei denen unterschiedliche Medien nacheinander in den Unfiltratraum geleitet werden, wobei beim Verdrängen eines Vormediums durch ein Nachmedium das Verhältnis der Nennleistung von Unfiltratstrom zu Filtratstrom > als 1 ist, vorzugsweise 95:5 ist.

9. Verfahren nach einem der Ansprüche 6 bis 8,
**dadurch gekennzeichnet, dass** es als Unterprozess einen Voranschwemmvorgang umfasst, bei dem in den Unfiltratraum ein Vormedium aus Wasser und Filterhilfsmittel eingeleitet wird, wobei das Verhältnis der Nennleistung von Unfiltratstrom zu Filtratstrom < 1 ist, vorzugsweise 1:9 ist.

10. Verfahren nach Anspruch 8 oder 9,
**dadurch gekennzeichnet, dass** es nach dem Voranschwemmvorgang einen Unterprozess umfasst, bei dem das Vormedium aus Wasser und Filterhilfsmittel mit dem zu filternden Unfiltrat verdrängt.

11. Verfahren nach Anspruch 6,
**dadurch gekennzeichnet, dass** das Verhältnis der Nennleistung von Unfiltratstrom zu Filtratstrom vorzugsweise 5:95 ist.

12. Verfahren nach einem der Anspruch 6 bis 11,
**dadurch gekennzeichnet, dass** es nach dem Filtrationsvorgang einen Unterprozess umfasst, bei dem der Filterinhalt durch ein Nachmedium ausgeschoben wird.

13. Verfahren nach einem der Ansprüche 6 bis 12,
**dadurch gekennzeichnet, dass** zur Vermeidung von CO2 -Entgasung die Unfiltratleitung und die Filtratleitung mit Druckhalte- und Regelventilen versehen ist.

## Claims

1. A precoat filter for filtration and/or stabilization of fluids, especially of beer, comprising a filter vessel (12) with an inlet (2) for unfiltrate, an unfiltrate chamber (5), a plurality of filter candles (10) arranged in the unfiltrate chamber, and an outlet for the filtrate (3), the unfiltrate chamber (5) having arranged therein at least one outlet (4) for the unfiltrate, and a means (7) for quantitatively controlling the unfiltrate outlet, the inlet for the unfiltrate (2) being arranged in an area beiow the filter candies (10), and the outlet (4) for the unfiltrate being arranged at or above the upper end of the filter candles (10), **characterized in that** a means (8) is provided for quantitatively controlling the filtrate outlet, so that the ratio of unfiltrate flow to filtrate flow is adjustable.

2. The precoat filter according to at least one of the preceding claims,
**characterized in that** the filter vessel (12) is divided by a partition wall (11) into a filtrate chamber (6) and an unfiltrate chamber (5), and the outlet for the unfiltrate (4) is arranged at the upper end of the filter candies relative to the partition wall (11) or in the partition wall.

3. The precoat filter according to claim 1,
**characterized in that** the filter vessel (12) comprises a register outlet (13) for the filtrate and the outlet (4) for the unfiltrate is arranged at or above the upper end of the filter candles (10) relative to the register outlet.

4. The precoat filter according to at least one of the preceding claims,
**characterized in that** the outlet for the unfiltrate (4) is connectable to a bypass line (14) to supply the discharged unfiltrate to the unfiltrate chamber (5) again.

5. The precoat filter according to claim 4,
**characterized in that** the bypass line (14) runs across an intermediate storage means (18).

6. A method for filtration and/or stabilization of fluids, such as beer, comprising a precoat filter, including the following steps:
- supplying an unfiltrate into an unfiltrate chamber, in an area below the filter candles,
- filtering the unfiltrate by filter candles
- discharging the filtrate, whereby a filtrate flow is produced,
- controlled discharge of part of the unfiltrate out of the unfiltrate chamber at or above the upper end of the filter candles, whereby an unfiltrate flow is generated,
**characterized in that**
both the outlet for the filtrate (3) and the outlet for the unfiltrate can be controlled quantitatively, and during the filtration process the ratio of the rated capacity of discharged unfiltrate flow to discharged filtrate flow is < 1.

7. The method according to claim 6,
**characterized in that** the discharged unfiltrate is again supplied via a bypass line (14) to the unfiltrate chamber.

8. The method according to claim 6 or 7,
**characterized in that** it comprises a plurality of successive sub-processes in which different media are successively passed into the unfiltrate chamber, the ratio of the rated capacity of unfiltrate flow to filtrate flow being > than 1, preferably 95:5, during displacement of a pre-medium by a post-medium.

9. The method according to any one of claims 6 to 8,
**characterized in that** it comprises a precoating operation as a sub-process in which a pre-medium consisting of water and filter aid is introduced into the unfiltrate chamber, the ratio of the rated capacity of unfiltrate flow to filtrate flow being > 1, preferably 1:9.

10. The method according to claim 8 or 9,
**characterized in that** after the precoating process it includes a sub-process in which the pre-medium of water and filter aid carries out a displacement with the unfiltrate to be filtered.

11. The method according to claim 6,
**characterized in that** the ratio of the rated capacity of unfiltrate flow to filtrate flow is preferably 5:95.

12. The method according to any one of claims 6 to 11,
**characterized in that** after the filtration process it comprises a sub-process in which the filter contents is discharged by a post-medium.

13. The method according to any one of claims 6 to 12,
**characterized in that** for avoiding CO₂ degasification the unfiltrate line and the filtrate line are provided with pressure-keeping and control valves.

## Revendications

1. Filtre à pré-couche pour la filtration et/ou la stabilisation de fluides, en particulier de bière, comprenant une cuve de filtration (12) avec une admission (2) pour du non-filtrat, un espace de non-filtrat (5), plusieurs bougies filtrantes (10) disposées dans l'espace de non-filtrat et une évacuation pour le filtrat (3), au moins une évacuation (4) pour le non-filtrat étant disposée dans l'espace (5), et un dispositif (7) pour réguler le débit d'évacuation du non-filtrat, l'admission pour le non-filtrat (2) étant disposée dans une zone sous-jacente aux bougies filtrantes (10) et l'évacuation (4) pour le non-filtrat étant disposée sur ou au-dessus de l'extrémité supérieure des bougies filtrantes (10), **caractérisé en ce qu'**il est prévu un dispositif (8) pour réguler le débit d'évacuation du filtrat, de sorte que le rapport du courant de non-filtrat sur le courant de filtrat est réglable.

2. Filtre à pré-couche suivant l'une au moins des revendications précédentes, **caractérisé en ce que** la cuve de filtration (12) est séparée par une cloison (11) en un espace de filtrat (6) et en un espace de non-filtrat (5), et l'évacuation pour le non-filtrat (4) est disposée sur l'extrémité supérieure des bougies filtrantes par rapport à la cloison (11), ou dans la cloison.

3. Filtre à pré-couche suivant la revendication 1, **caractérisé en ce que** la cuve de filtration (12) présente un registre d'évacuation (13) pour le filtrat, et l'évacuation (4) pour le non-filtrat est disposée sur ou au-dessus de l'extrémité supérieure des bougies filtrantes (10) par rapport au registre d'évacuation.

4. Filtre à pré-couche suivant l'une au moins des revendications précédentes, **caractérisé en ce que** l'évacuation pour le non-filtrat (4) peut être raccordée à une conduite de bipasse (14), pour recycler le non-filtrat évacué dans l'espace (5) de ce dernier.

5. Filtre à pré-couche suivant la revendication 4, **caractérisé en ce que** la conduite de bipasse (14) passe par un réservoir intermédiaire (18).

6. Procédé pour la filtration et/ou la stabilisation de fluides, tels que par exemple bière, avec un filtre à pré-couche, comprenant les phases suivantes :
- arrivée d'un non-filtrat dans un espace de non-filtrat, dans une zone sous-jacente à des bougies filtrantes,
- filtration du non-filtrat par des bougies filtrantes,
- évacuation du filtrat, un courant de filtrat étant produit de ce fait,
- évacuation réglée d'une partie du non-filtrat de l'espace de non-filtrat sur ou au-dessus de l'extrémité supérieure des bougies filtrantes, un courant de non-filtrat étant produit de ce fait,
**caractérisé en ce que**
aussi bien l'évacuation pour le filtrat (3) que l'évacuation pour le non-filtrat peuvent être régulées en débit et le rapport du débit nominal du courant de non-filtrat évacué sur le courant de filtrat évacué est < 1 pendant l'opération de filtration.

7. Procédé suivant la revendication 6, **caractérisé en ce que** le non-filtrat évacué est recyclé par l'intermédiaire d'une conduite de bipasse (14) dans l'espace de non-filtrat.

8. Procédé suivant l'une des revendications 6 et 7, **caractérisé en ce qu'**il comprend plusieurs sous-processus successifs lors desquels différents fluides sont envoyés les uns après les autres dans l'espace de non-filtrat, le rapport du débit nominal du courant de non-filtrat sur le courant de filtrat étant > 1 , de préférence de 95 :5, lors de la substitution d'un pré-fluide par un post-fluide.

9. Procédé suivant l'une des revendications 6 à 8, **caractérisé en ce qu'**il comprend en tant que sous-processus une opération de pré-entraînement, lors de laquelle un pré-fluide d'eau et d'agent auxiliaire de filtration est introduit dans l'espace de non-filtrat, le rapport du débit nominal du courant de non-filtrat sur le courant de filtrat étant < 1, de préférence de 1 : 9.

10. Procédé suivant l'une des revendications 8 et 9, **caractérisé en ce qu'**il comprend un sous-processus après l'opération de pré-entraînement, lors duquel le pré-fluide d'eau et d'agent auxiliaire de filtration est substitué par le non-filtrat à filtrer.

11. Procédé suivant la revendication 6, **caractérisé en ce que** le rapport du débit nominal du courant de non-filtrat sur le courant de filtrat est de préférence de 5 : 95.

12. Procédé suivant l'une des revendications 6 à 11, **caractérisé en ce qu'**il comprend un sous-processus après l'opération de filtration, lors duquel le contenu du filtre est repoussé par un post-fluide.

13. Procédé suivant l'une des revendications 6 à 12, **caractérisé en ce que** la conduite de non-filtrat et la conduite de filtrat sont munies de soupapes de régulation et de maintien de pression pour éviter le dégazage CO₂.
